# EUROPEAN PATENT SPECIFICATION

(11) **EP 2 659 580 B1**
(45) Date of publication and mention of the grant of the patent: **22.07.2020**
(21) Application number: 11811430.5
(22) Date of filing: 23.12.2011
(51) Int. Cl.: H02N 11/00, F03G 7/00

(54) **THERMODYNAMIC DEVICE BASED ON A MAGNETIC FIELD AND CURIE EFFECT**
THERMODYNAMISCHE VORRICHTUNG AUF MAGNETFELD- UND CURIE-EFFEKTBASIERTE
DISPOSITIF THERMODYNAMIQUE BASÉ SUR UN CHAMP MAGNÉTIQUE ET SUR L'EFFET CURIE

(30) Priority: 29.12.2010 NL 2005937; 19.04.2011 NL 2006633
(43) Date of publication of application: 06.11.2013
(73) Proprietor: Komkommer, Daniël, 4491 GE Wissenkerke (NL)
(72) Inventor: Komkommer, Daniël, 4491 GE Wissenkerke (NL)
(74) Representative: Grootscholten, Johannes A.M.
(86) International application number: PCT/NL2011/050896
(87) International publication number: WO 2012/091565

(56) References cited:
- WO-A1-94/15393
- WO-A1-94/15393
- GB-A- 2 240 433
- GB-A- 2 240 433
- JP-A- 1 129 785
- JP-A- 1 129 785
- US-A- 4 730 137
- US-A- 4 730 137
- US-A1- 2010 253 181
- US-A1- 2010 253 181

## Description

The present invention relates to a thermodynamic device based on a magnetic field and Curie effect for heat/energy conversion. A dynamo or other type of generator can be coupled to such a device for the purpose of generating electrical energy from an excited movement, or dynamic energy (movement) produced thereby can be directly utilized as mechanical energy, for instance as drive for an installation coupled thereto.

Known from US 2010/0253181 A1 is a device of the type having a number of the features of claim 1, such as: a frame; a carrier coupled rotatably to the frame; at least two elements with magnetic properties which are associated with the carrier and move in a path during rotation of the carrier; a magnet which is oriented to the path; and a heat source which is disposed close to the path and at a distance from the magnet along the path in order to selectively heat elements in an orientation close to the magnet.

The known device has a number of drawbacks. The carrier is susceptible to the heat source and can thus display an unacceptable saturation and begin to heat elements. When the elements are heated by the carrier and not only by the heat source, there is a danger of the elements being unable to cool sufficiently after being heated by the heating, this rendering the entire operation of the device ineffective. The disclosure of US 2010/0253181 does not give any cause to change the configuration known therefrom in any way, or to even consider doing so. This known technique is based on a fixed main magnet and magnetic rings or magnetic discs in the form of thin plaques as the elements which are mounted on a disc as carrier and reach their Curie temperature through heat, after which they cool once again in order to be reheated. The alleged operation can however not be realized because heating a magnet irrevocably results in the loss of its magnetic properties.

Known from US-4730137 is a configuration wherein at least one element with magnetic properties is arranged on a rim-like disc of a wheel-like carrier rotatable about a shaft. There is here also the danger of the rim-like disc, against which the at least one element with magnetic properties is wholly arranged, being heated to such an extent after a period of time in use that it contributes - in addition to the heating - toward heating of the elements, and the alleged operation of this known device is thus rendered ineffective.

GB 2240433 and WO 94/15393 both relate to a single ring as element with magnetic properties on and round a substantially round disc as carrier.

JP 1129785 relates to a configuration based on a completely different principle, wherein elements are arranged on a carrier which is supposedly belt-like and trained around reversing wheels, and the belt-like carrier is intended to rotate around the reversing wheels.

The present invention has for its object to provide an improved device compared to the known configuration, wherein the stated drawbacks are obviated or at least considerably reduced.

For this purpose a device according to the present invention is distinguished at least by all the features in combination according to the single independent claim 1.

The present invention has many other additional and occasionally even alternative embodiments as defined in the appended dependent claims.

The device according to the invention can thus have the feature that the carrier comprises a rotatable disc.

Additionally or alternatively, a device according to the invention can have the feature that the elements comprise individual bar-like components.

Additionally or alternatively, a device according to the invention can have the feature that the carrier is placed at least partially in a cooling device. In such a configuration a device according to the invention can further have the feature that the cooling device comprises a basin with cooling water therein.

Additionally or alternatively, a device according to the invention can have the feature that the heat source comprises at least one light-focussing member, such as a lens or a mirror, for focussing light on at least one (selected) of the elements. In such a configuration a device according to the invention can further have the feature that the device can be arranged outside and that the light is sunlight.

Additionally or alternatively, a device according to the invention can have the feature that the carrier can at least be coupled to a rotation shaft, and the rotation shaft can in turn be coupled to at least one of a dynamo, an installation to be driven or any other form of a load.

Additionally or alternatively, a device according to the invention can have the feature that the magnet is a permanent magnet.

Additionally or alternatively, a device according to the invention can have the feature that the carrier comprises a disc.

An embodiment of a device according to the present invention is described hereinbelow with reference to the accompanying drawing, which shows a non-limitative embodiment of a device according to the present invention in which the same or similar elements, components or features are designated with the same reference numerals, and in which:
Fig. 1 shows a part of a device according to the present invention;
Fig. 2 shows a part of the device of fig. 1 and according to the present invention;
Fig. 3 shows a part of the device of fig. 1 and according to the present invention;
Fig. 4 shows a part of the device of fig. 1 and according to the present invention;
Fig. 5 shows a side view of a carrier with elements and a magnet thereon;
Fig. 6 shows a schematic view of adjustment of the positions of elements/bars in the direction of double arrow B;
Fig. 7 shows adjustment of the orientation of the heat focus 7 and/or the magnet 4 along the length of the elements/bars 2; and
Fig. 8 shows a stripe-like heat action area 7 of the heat source.

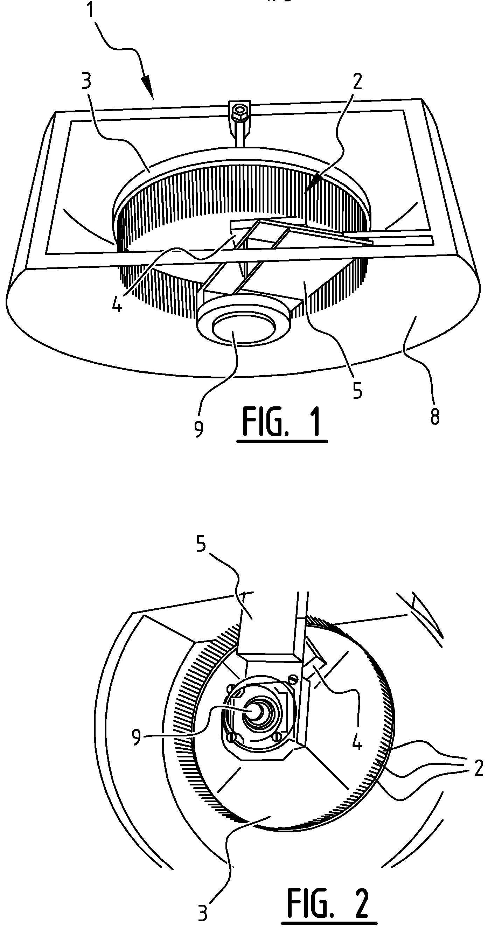

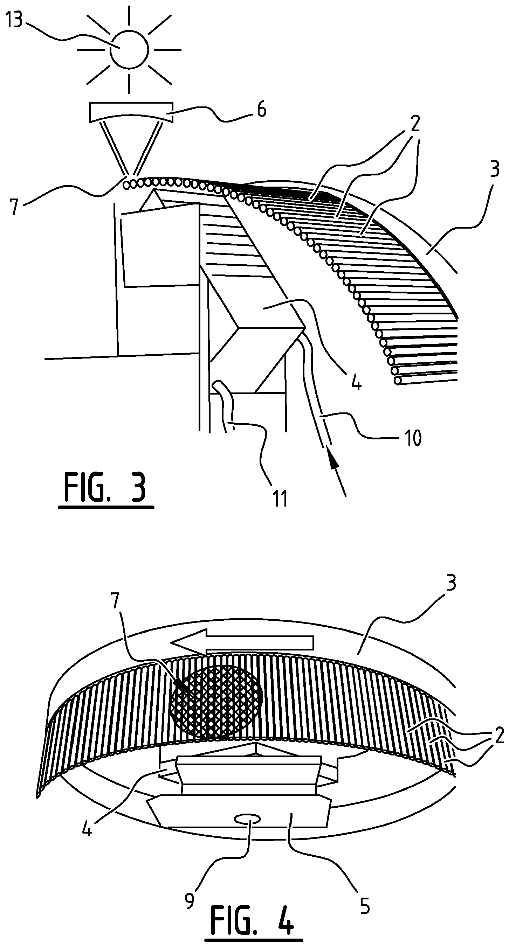

The principle of devices according to the present invention is based on influencing the ferromagnetic effect of bars 2 (which form the elements from the appended claims), which are made up of at least one ferromagnetic type of metal (see Table 1 and "What is Ferromagnetism") round the periphery on a disc-like carrier in the form of disc 3. A constant magnetic attractive force is exerted on bars 2 by a permanent magnet 4 fixedly aligned for this purpose (see Table 2). The heat source serves to heat these bars 2 so that the temperature thereof begins to approach the Curie Temperature (Tc) associated with the type of material thereof (as of here: Curie Moment) (see Table 1 and "What is Curie temperature"). This influencing results in a rotating effect of the bars 2 disposed in series round the periphery of disc 3 (as embodiment of a carrier) relative to the position of permanent magnet 4. Magnet 4 here attracts bars 2 at a distance therefrom and disc 3 rotates, precisely because the magnetization of bars 2 lying closer-by is as it were (temporarily) "switched off" due to the heating thereof. This effect can be particularly realized if the location of heating of bars is situated adjacently of the magnetic centre of permanent magnet 4 (see Fig. 3 and/or Fig. 4) and the heated bars 2 form part of a serial arrangement around permanent magnet 4, and this serial arrangement is suspended in bearing-mounted manner, particularly from disc 3 in Fig. 1.

The main components of a possible embodiment of a device according to the present invention are:
1. A magnet holder 5 and a permanent magnet 4 secured to a base or frame (not shown) for disc 3;
2. The disc 3 itself, which is made up of bars 2 round the periphery of the disc 3, which realizes an increase in torque; see perspective side view of Fig. 2.
3. Bars 2 (elements/bars) of a ferromagnetic composition (Table 1)
4. Increase in torque by means of diameter of disc 3 (see side view of Fig. 2)
5. Heat source, such as a solar ray focussed in a focal point 7 using mirror or lens 6 (see Fig. 3)
6. Optionally a cooling installation, see Fig. 1; where the cooling is realized in the form of a basin 8 with cooling liquid, shown in partially cut-away view.

The embodiments of devices 1 according to present invention shown in figures 1-4 all comprise a stainless steel paramagnetic disc 3 as carrier, on which bars 2 are aligned adjacently of each other and preferably separately of each other such that they can also serve as shield to protect permanent magnet 4 from the high temperature - in some embodiments - of a heat source, which is formed in figure 3 by a lens 6 for focussing light from the sun 13. In the shown embodiment the bars have a round cross-section, but can also have elliptical, square, rectangular or triangular cross-sectional forms. Permanent magnet 4 is situated behind bars 2 in relation to heat source 6, 13 as a non-co-rotating part of the suspension of disc 3 and has to be moved to and anchored as close as possible to bars 2.

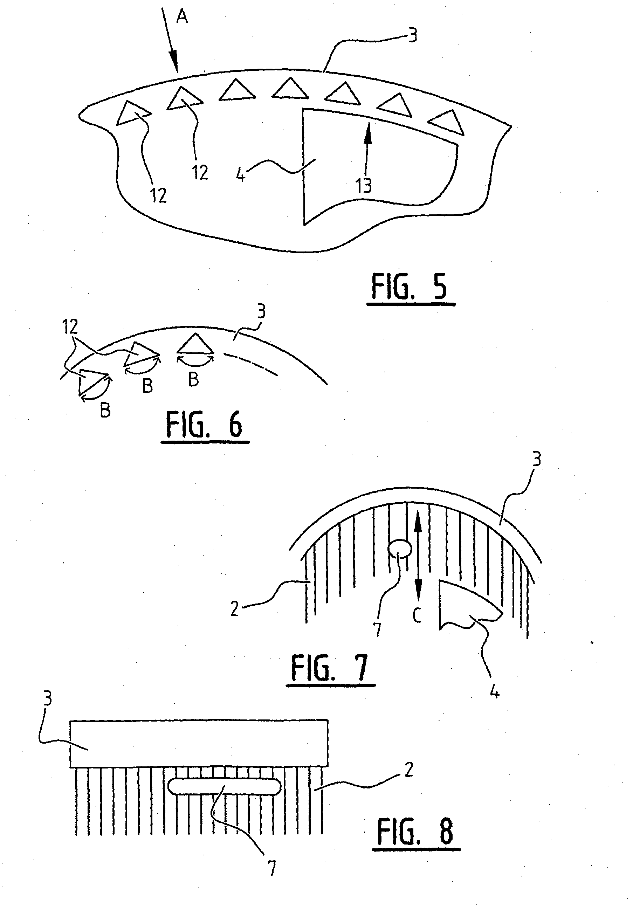

Figure 5 shows a part of an alternative embodiment with triangular cross-section bars 12. The triangular form of triangular cross-section bars 12 can serve to increase the effective surface area available for heating from the direction of arrow A. For this purpose an optimized apex angle of the triangular form can be defined, wherein the apex angle is directed toward arrow A, in order to maximize the effective surface area, for instance without deflection as could occur with a form of round cross-section. This lies within the scope of the normal knowledge of the skilled person and will not be further described here. The bars can taper to a point, similar to the shape of a toothpick.

The position of the bars can also be adjustable, for instance in the direction of double arrows B in figure 6. Triangular cross-section bars 12 can be arranged here on disc 3 for rotation about their longitudinal axis in order to influence the effective surface area for heat irradiation along arrow A or adjust it to temporary or more permanent conditions. Triangular cross-section bars 12 can further extend at right angles to disc 3 and so axially relative to the axis of the disc, as in the accompanying figures, or in a radial direction relative to the disc so as to as it were define a ring round disc 3. In a plane parallel to disc 3 the bars 12 can here have an outward diverging form, whereby the effective surface area of a bar to be heated in each case by the heat source varies with the position along the bar at which this heat source is directed. The same feature applies for the pointed axial bars, which can also be disposed radially. The bars do not necessarily have to be straight and can have curves or even angles as well.

It is further also noted that the magnet in the embodiment of figure 5 has a curved external surface 13 to enable placing of magnet 4 as close as possible to the (path of the) bars 12.

It is also noted that the position of the magnet can be adjustable. For this purpose magnet holder 5 can be arranged adjustably on the frame, or magnet 4 can be arranged adjustably on magnet holder 5. The magnet holder can comprise a cooling for the magnet, as further described hereinbelow.

Forced water cooling of bars 2 and relevant parts of disc 3 can optionally be realized by means of rotating the disc 3 through basin 8 of Fig. 1. This can also serve to protect magnet 4. Additionally or alternatively, magnet 4 itself can be cooled or, more particularly, it can be cooled indirectly via magnet holder 5, for instance by liquid cooling, for which purpose serve the feed conduit 10 and discharge conduit 11 shown in figure 3.

The heating of bars 2, which must be generated by a heat source with sufficient efficiency to be able to supply five times the Tc of the chosen ferromagnetic metal type (see Table 1), has to take place above the location behind which permanent magnet 4 is situated. It is advantageous and desirable here for the heat source to be directed at at least one of the bars 2 in a focal point 7 just slightly adjacently of the magnetic centre (N/S) of permanent magnet 4 (see Fig. 3 and/or Fig. 4). The size and/or shape of this focal point is preferably adjustable or controllable, or at least other sizes and/or shapes thereof can be selected, which are then subsequently (for instance after production of the device) fixed or thus take an adjustable form. It may thus be desirable for the focal point to be selected or set in elliptical or even linear form, or for focal point 7 to cover the full length of bars 2 or only a part thereof, and so on. The magnetic field orientation of the optionally cooled permanent magnet 4 is chosen such that it lies in line with the rotation direction of disc 3, i.e. parallel to the rotation direction of bars 2. The function hereof is that the orientation of the magnetic field is chosen in the most favourable manner to be able to achieve the greatest possible magnetic attractive force on bars 2. A magnetic equilibrium is created between magnet 4 and those bars 2 on disc 3 (the carrier of the appended claims) which lie inside and for a small part outside the magnetic field of permanent magnet 4. If for instance one or two mutually adjacent bars 2 were to be removed, the disc 3 will rotate toward the subsequent magnetic equilibrium, i.e. in the direction of the resulting hole. It is therefore due to the heating that bars 2 are as it were removed (the magnetism thereof is as it were temporarily "switched off") and bars 2 are as it were re-placed due to cooling. Owing to the heating at least one of the bars 2 at a time will be heated and eventually gradually reach the Curie Moment, and a so-called paramagnetic hole then occurs in the magnetic equilibrium between bars 2 and magnet 4. Disc 3 will begin to rotate because subsequent bar 2 becomes the next point of equilibrium for the natural magnetic equilibrium between bars 2 and magnet 4. Reaching Tc is a gradual process. This moment is not an on/off moment but is based on a gradation curve and is thereby highly suitable as switching system in such an application (see Residual energy).

Because the subsequent bar 2 heats up quickly, for instance within several milliseconds, this subsequent bar 2 will also gradually undergo the Curie Moment despite the movement thereof, as will the next, and so on. It is noted that where reference is made here to a single bar 2, it will be apparent that focal point 7 can cover a plurality of bars, as also shown in fig. 4. In one revolution of disc 3 a single bar is given sufficient time to cool down again to below the Curie Moment, for which purpose a basin 8 with cooling liquid can be provided if it were found that cooling could not be realized quickly enough. The radius chosen for disc 3 is also of great importance, not only for the cooling cycle but also for the eventual conversion of the magnetic attractive force between permanent magnet 4 and bar 2. This impulse is determined wholly subject to the type of permanent magnet 4, the type of metal of bars 2 (see Table 1) and the intensity of the heat source (preferably sunlight via a lens 6 or mirror). The final force which can be measured on spindle 9 of disc 3 is however many times greater if the distance from bars 2 to spindle 9 of disc 3 (i.e. the diameter of the disc-like carrier) is increased. The rotation speed of disc 3 decreases as the radius increases, but the force on spindle 9 increases. The force exerted on spindle 9 of disc 3 is directly proportional to the attractive force between bars 2 and magnet 4, but disproportionally greater due to the distance used between bar 2 and spindle 9 of disc 3 by means of the increase in torque (see Fig. 2).

The rotation speed of disc 3 depends on the temperature generated by systems supplying heat at a point, such as a lens 6 or a mirror, the chosen type of metal and diameter of the bars 2 used, the cooling installation which may or may not be present (basin 8 and/or magnet cooling 10, 11) and the reduction in force.

It is noted that, in contrast to the known devices and systems, it is possible to influence this rotation speed. This can not only be incorporated in the basic design of an embodiment of a device according to the invention, but the rotation speed can also be influenced during use of an already produced device.

### Residual energy

When resistance is now applied to spindle 9 (connecting a dynamo or other type of load thereto), disc 3 will still tend to continue to rotate because
a) the Curie Moment is of a gradual nature and, because of the deceleration of the rotation speed of the disc due to resistance, the Curie Moment will be approached increasingly more closely and there will thus also be a directly proportional increase in the impulse
b) the surrounding bars 2 will now also approach their Curie Moment, whereby the so-called paramagnetic hole becomes larger but there is also a directly proportional increase in the impulse. Spindle 9 can hereby be connected to a transmission in order to convert rotation to electrical energy or mechanical energy.

### As converter of solar energy

The assembly/combination of a solar tracker (not shown), sunlight concentrating unit or lens 6, a disc 3 on the basis of the above described process, sunlight excluder and optionally the cooling installation - in a possible embodiment a basin 8 - encompasses the whole principle behind the present invention and is aimed at sunlight 13 and self-sustainability. The invention however also operates with (all) other heat sources, provided they can be directed. Other than in the case of PV panels, a device according to the invention produces heavy current instead of weak current and needs less surface area than a PV panel. This principle also applies under water, for instance in basin 8, and the water (or any other cooling liquid) acts to enhance the effect. A byproduct hereof is however warm water, and in some cases hydrogen, if use is made of an alloy of lanthanide and ferro metals. If water cooling forms part of a device 1 according to invention, this requires an additional control unit to enable monitoring of the levels and temperatures, and additional fields of application are hereby possible. Another form of startup energy is never needed for the whole, since the whole concept has been devised on the basis of self-sustainability and can provide itself with startup energy purely by means of the sun 13. This however also applies to all other heat sources and combination configurations.

### Applicability

The applicability of the present invention lies in all situations where energy extraction and water displacement or irrigation, or purification, by means of the sun 13 or other, preferably though not exclusively, natural heat providers is desirable and contributes toward the improvement of our living environment. Device 1 is assembled from materials and raw materials, the manufacturing process of which can in some cases have an environmental impact, although once they have been produced they have practically no further effect. Given the simplicity of the design and the provided durability of the materials required, maintenance costs are limited to a minimum. It will also be possible, with little modification, to use my machine outside the earth's atmosphere as aggregate, with the understanding that a water cooling installation (basin 8 or magnet cooling 10, 11) is then not used, but a heating chamber for the magnet and bars.

**Table 1**

| Partial list of ferromagnetic materials with their magnetic moment at room temperature. | | | | |
|---|---|---|---|---|
| *Material of bar* | *Curie temperature. (Kelvin)* | *Curie temperature. (Celsius)* | *A m²*/*Kg magnetic field strength at room temperature* | *Magnetic Moment* |
| Fe | *1043* | *769.85* | *218* | *2.22* |
| *Co* | *1388* | *1114.85* | *161* | *1. 72* |
| *Ni* | *627* | *353.85* | *55* | *0.606* |
| *Etc...* | | | | |

**Table 2**

| The maximum energy product is a measure of the maximum magnetic energy stored in a magnet. This is the maximum possible for a material product with flux density B and field strength H. According to a feature, a unit of kJ/m³ (kilojoule per cubic metre) or MGOe (Mega Gauss Oersted) is used. Either a small magnet with a higher energy product or a large magnet with a lower energy product can be used for the same application. | | | | | | | |
|---|---|---|---|---|---|---|---|
| The maximum energy product of permanent Neodymium magnets: | | | | | | | |
| Line force (Kg) | Length (mm) | Width (mm) | Thick ness (mm) | Energy product MGOe | Weight (gr) | Composition | Max. temp (C°) |
| 6.00 | 30.0 | 10.0 | * 5.0 | 42 | 11.00 | Ni-Cu-Ni | 80 |
| 35.00 | 30.0 | 30.0 | *15.0 | 45 | 100.00 | Ni-Cu-Ni | 80 |
| 8.00 | 40.0 | 10.0 | * 5.0 | 42 | 15.00 | Ni-Cu-Ni | 80 |
| 15.00 | 40.0 | 10.0 | *10.0 | 42 | 30.00 | Ni-Cu-Ni | 80 |
| 8.00 | 40.0 | 15.0 | * 5.0 | 40 | 23.00 | Ni-Cu-Ni | 80 |
| 8.80 | 40.0 | 20.0 | * 5.0 | 42 | 30.00 | Ni-Cu-Ni | 80 |
| 25.00 | 40.0 | 20.0 | *10.0 | 42 | 61.00 | Ni-Cu-Ni | 80 |
| 60.00 | 40.0 | 40.0 | *20.0 | 42 | 240.00 | Ni-Cu-Ni | 80 |
| 29.00 | 46.0 | 30.0 | *10.0 | 40 | 100.00 | Ni-Cu-Ni | 80 |
| 33.00 | 50.0 | 15.0 | *15.0 | 48 | 86.00 | Ni-Cu-Ni | 80 |
| 12.00 | *50.0 | 25.0 | 10.0 | 40 | 95.00 | Ni-Cu-Ni | 80 |
| 100.00 | 50.8 | 50.8 | *25.4 | 40 | 500.00 | Ni-Cu-Ni | 80 |
| 56.00 | 60.0 | 30.0 | *15.0 | 40 | 210.00 | Ni-Cu-Ni | 80 |

### What is Curie temperature

The Curie temperature is the temperature above which ferromagnetic materials cease to have a permanent magnetic field around them. If an iron magnet is for instance heated above the Curie temperature of 770°C, it is then no longer ferromagnetic, and then becomes paramagnetic. Once the iron has cooled again, the permanent magnetic field does not return. A magnetic field is however once again present in small regions in the material, the so-called Weiss domains (Pierre-Ernest Weiss), although these fields point in random directions so that no resulting external magnetic field is present. It is however possible to remagnetize the iron. The Curie temperature is difficult to measure exactly. Firstly, the permanent magnetic field around the material disappears only gradually. Secondly, the Curie temperature is greatly dependent on small contaminants in the material, especially on the iron present everywhere.

### What is Ferromagnetism

Ferromagnetism occurs in materials which comprise unpaired spins between which there is interaction which results in the atomic magnetic moments being aligned parallel to each other. This results in spontaneous and permanent magnetic fields around an object manufactured from a ferromagnetic material. Although in a material there are usually interactions which will tend to direct the spins in the same direction as well as interactions which conversely direct the spins in opposite directions, the first forces thus prevail in a ferromagnet (anti-ferromagnetism otherwise occurs). All spins in a ferromagnet can in principle come to lie in the same direction - in this case the object approaches its magnetic saturation and has a large spontaneous magnetic field. It is however also possible that the ordering of the spins takes place in smaller domains, the so-called Weiss domains. If the magnetization direction of the domains is random, the overall field of the object is zero, although magnetic ordering does occur. All domains can be pulled (magnetized) in the same direction by being exposed to a strong external field.

When the temperature is increased the movement of temperature provides for a gradual breakdown of the spin order. At a determined temperature, the Curie temperature Tc, the ordering collapses because the thermal energy has become greater than the energy of the magnetic interaction. Above Tc the material behaves paramagnetically, the reciprocal susceptibility plotted against the absolute temperature then forms the characteristic straight line of a paramagnet. The line however extends through T = Tc instead of through T = 0 K because the interaction between the spins does persist even though the thermal energy impedes the ordering.

With a combination of the used magnet profile, heating profile and bar profile it is possible to opt for a fast or slow rotating system. A slow rotating system, or tractor system, generates a greater moment on the shaft of the disc, while a fast rotating system generates a greater number of rotations of the disc measured per unit time.

The diameter of the disc has to correspond to the cooling profile of a bar in relation to the peripheral speed of the disc and is hereby very important for the utility of the invention. Increasing the disc diameter increases the torsion on the shaft of the disc but reduces the number of rotations of the shaft.

Bars can be sub-divided into profiles since they can consist of different materials, can have different shapes and thereby have heating and cooling characteristics. This parameter relates substantially to the design of an embodiment and the resulting limitations thereof, such as the rotation speed and/or force to be generated.

The bars react to the applied magnetic field, whereby each bar is attracted on the basis of the ferromagnetic properties thereof. The closer the bar is positioned to the magnet in the magnetic field, the more this magnetic attractive force on the bar can increase. This magnetic field is generated by permanent magnet 4, and the term "magnetic permeability" is used later in the text to designate a numeric value of this attractive force, which is also defined by the air gap between permanent magnet 4 and bars 2.

In Figure 5 pyramid-shaped bars (triangular in cross-section) are mounted on disc 3. These bars are wide at the base directed toward heat source 6, 13, which has the result that both the permeable part for the purpose of the magnetic field and the temperature contact surface for the purpose of the applied heating are large.

The material of which the bar consists (see table 1) defines both the heat to be generated and the force produced. A nickel bar has a magnetic susceptibility, expressed below in magnetic field strength of 55 A m²/Kg, and requires 353°C to reach Tc. A steel bar will on the other hand have a magnetic field strength of 218 A m²/Kg, but also requires 769°C to reach Tc. In other words, it will be possible to extract more force from a steel bar, but the temperature required to reach +Tc has to be about double that of nickel. If use is however made of a gadolinium bar, the +Tc of which lies around 19°C, it will be apparent that substantially boiling water is sufficient to obtain rotation, wherein it must be noted that the magnetic coupling will not be great.

Since the bar forms part of the disc and rotates continuously, the temperature in heat focus 7 required to bring a bar of the relevant material to +Tc in a fraction of a second must therefore be many times higher than the standard +Tc temperature for a relevant material of a bar. Due to the rotating movement of the disc only a fraction of a second is available to reach +Tc in at least a part of a bar in zone 7.

Higher temperature means higher rotation speed, but also greater chance of damage to the bar if it is a fast disc that is to be achieved. In the case of a slow disc, higher temperature on a thicker bar will result in a higher attractive force.

There is therefore a relation between the quantity of ferromagnetic material in respect of temperature required to reach +Tc and the force produced here by temporarily "switching off" the paramagnetic properties of the bar by means of heating with the heat source.

In addition, the chosen "Magnet profile" and associated "Heating profile" define the design/embodiment of the bar. Since the heating and cooling of the bar on the one hand and the magnetic permeability of the bar and magnetic attractive force (susceptibility to its paramagnetic properties) on the bar on the other are defining factors for achieving the moment of transition between -Tc and +Tc within a magnetic field in respect of temporarily suppressing the paramagnetic properties of the bar, the design of a bar can be given optimal form on the basis of these factors.

The bar is thus formed such that it can be heated in the most advantageous possible manner, while due to its paramagnetic susceptibility it is also pulled as optimally as possible into the magnetic field. For this purpose the magnet has in figure 5 at surface 13 a shape approximating the path of the bars as closely as possible. The short distance between the bar and magnetic field is hereby very important, but so is the contact surface or surface area of the bar in the heat source.

As shown in figure 5, the bar has a pyramid or triangular shape in cross-section of a bar, on the upper side for instance an angle of 80° between two sides as optimal contact surface between the material and heat source in order to absorb the temperature and increasing the strength of the construction in order to prevent bending of the bar which may occur due to the magnetic field, and a flat or hollow foot/base as contact surface or surface area between the material and the magnetic field, wherein the height of the pyramid ensures both the permeability of the magnetic field and the bar stiffness against bending.

If magnet 4 is placed on the inside of the bar array as in figure 5, and the heating of the bars of course takes place on the outside above the bars and magnet, the optimal heating of the bar on the one hand and the magnetic attraction by the magnet on the other define the bar shape.

There is therefore a relation between temperature, magnetic and permeable properties of the contact surface in respect of the shape of the bar which fits best here in a chosen orientation relative to the disc, and otherwise the bar stiffness.

The mass of the bars is also important in enabling control of the rotation speed. A thin bar will reach the Tc temperature and cool down again sooner than a thick bar, although the magnetic permeability decreases correspondingly with the lesser mass. A thicker bar will reach the Tc temperature less quickly and also cool again more slowly, although the magnetic permeability will increase. In respect of the bar mass a distinction can thus be made between a fast, weak bar and a slow, strong bar.

The length of each bar also defines the magnetic transition mechanism in relation to the eventually produced rotation speed of the disc, and also serves to prevent heat saturation of the whole bar and disc. It may be that cooling only has to be applied to the magnet for this purpose. If the bar is heated centrally (in the middle), it will need longer to reach +Tc and also to cool down again to -Tc. If on the other hand it is heated solely at one outer end, reaching +Tc and cooling down again to -Tc will take considerably less time. If a bar is heated in the middle of its length, it will then be able to undergo a greater attractive force in the magnetic field since more material is involved in reaching +Tc, both for the heating and cooling thereof.

By for instance applying a wider magnetic field, and associated deeper heating, it becomes possible to cause greater attractive force. It should however be noted here that due to the heat saturation of the whole bar there will be a smaller range within which the bar can still react actively to the magnetic field. Overheating and even melting of the bar must be avoided. There will also be a drastic decrease in the rotation speed due to deeper heating. Conversely, it is then also possible that a greater range can be determined in heat saturation when heating takes place more toward the outer end of the bar and use is made of a narrower magnetic field. The rotation speed will increase considerably and the chance of the bar being damaged by overheating or melting will decrease, but so will the impulse generated to the shaft. In a design of a device according to the invention it is possible to make the magnet profile variable and be able to orient it during use, and the same applies for the position of bars and the shape of the focal point or heating area 7 to thus enable varying of the rotation speed and/or force produced by the device.

There is therefore a relation between the bar length in respect of a fast, weak and a slow, strong bar, and a risk of saturation/damage in relation to this bar length. Each bar is further placed such that there is no contact with adjacent bars, so that heat dissipation and cooling of the bar has no effect on the adjacent bars. The connection of each bar to disc 3 is preferably realized such that heat loss to the disc is as minimal as possible. Bar 2 also serves as shield to prevent heating of permanent magnet 4. Since the magnet fails above an associated temperature, for instance 80°C, a cooling for the magnet can be used which ensures that the magnet is always kept below this critical temperature.

The greater the gap between the bars, the more powerful, within determined limits, the reaction to the magnetic field will be. The drawback of this greater gap is that a sufficient cooling of the magnet may become necessary. If provided, the cooling installation for the magnet must provide sufficient cooling to keep magnet 4 below the critical temperature. There is thus a relation between the mutual bar distance and force produced, but also as shield against direct magnet heating.

If heating of the free outer end of the bar takes place (at a distance from disc 3), the heat will flow as a wave over the length of the bar from the outer end of the bar toward the disc.

If heating takes place in the centre of the bar, the heat will act as a heat wave from the centre of the bar to the outer ends of the bar. The heating location along the length of the elongate bars is thus a design parameter for setting the operation. This location can also be variable during use, for instance by making it possible to orient lens 6 or to adjust the shape of area 7, in order to realize a desired rotation speed or force produced as required during use. A whole bar or part of each rotating bar must be heated in a fraction of a second to the +Tc temperature if a fast rotating disc is desired. If a slow rotating disc is desired, more time will be available to achieve this, but there must still be sufficient time available to reach +Tc and to cool down to -Tc.

In order to allow heating to take place as favourably as possible the bar is formed such that it can absorb the applied heat optimally. This is realized in the design of figure 5 by making the temperature contact surface as large as possible.

Conversely, the lateral alignment of the heat source at right angles to the temperature contact surface of the bar also determines whether a disc rotates quickly or slowly.

There is therefore a relation between the applied heat/intensity and the time required to heat the bar to +Tc and the rotation speed of the disc.

Within a predetermined time a bar in movement must be cooled, optionally in forced manner, to (just) below the +Tc temperature. The bandwidth between +Tc and -Tc is relatively small, but important for determining the smallest possible disc diameter.

If the cooling period for the bar is longer than one revolution of disc 3, rotation will then stagnate and display uncontrolled behaviour and become unusable. This is a basic parameter for the design of a device.

The cooling, for instance with basin 8 in figure 1, of bars 2 and disc 3 need not be forced.

There is thus a relation between the time required to cool one bar to -Tc relative to the revolutions produced per minute, and this in turn influences a smallest diameter of the disc in combination with the rotation speed thereof.

In summary concerning the bars:
The bar shape defines the temperature and magnetically permeable contact surface, the bending resistance and heat-shielding features.

The bar mass as permeable contact surface also defines a fast, weak or a slow, strong bar.

The bar length for the purpose of a fast, weak and a slow, strong bar, but also as buffer to prevent the risk of saturation/damage.

The mutual bar distance relates to the force produced, but also has a function of shielding against direct magnet heating.

The heating profile defines the applied heat/intensity in time required to heat the bar to +Tc in relation to the rotation speed of the disc.

Cooling profile defines the time required to cool one bar to -Tc relative to the revolutions produced per minute.

The permanent magnet which is used (see table 2) can be formed to the contours or path of movement of bars 2 on disc 3 so that the distance between bars 2 and magnet 4 is small (see surface 13). The magnetic field orientation of magnet 4 must also be directed optimally for the purpose of the strongest possible paramagnetic reaction of the bar. This is because there is an exponentially increasing flux the more closely the surface of the magnet approaches the surface of the bar.

A field has contours and also a volume. Length, width and height/depth of the field represent these contours. A wide magnet, if aligned at right angles to the bar, will exert a magnetic flux on a greater part of the bar, while a narrow magnet can realize the same magnetic flux but on a smaller part of the bar. It is hereby possible to align the magnet at right angles to the outer end of the bar so that, for instance at heat focus (a small area 7 in figure 4) on the outer end of the bar, an acceleration can be brought about in effective manner. Adjustment of the heat source and the magnet during use is comparable to operating an "accelerator pedal". If the position of the magnetic field is displaced together with the heat focus toward the centre of the bar, the disc will rotate more slowly because heat needs more time to bring the bar to +Tc, although due to this in situ displacement the overall magnetic field will encounter more permeable material of the bar and so begin to pull harder. Conversely, the disc will begin to rotate more quickly if the magnet profile and the heat profile are directed more toward the outside of the bar. The number of rotations will increase, but so will the force due to the reduced influence of the magnetic field on the bar.

The above mentioned magnet cooling housing is integrated in magnet holder 5 and forms part of the magnetic head, and comprises magnet 4 and magnet mounting 5 as well as cooling liquid for keeping the vicinity of the magnet at a temperature lower than for instance 80°C, and is connected to a reservoir in which the cooling liquid can cool on the basis of a circulation mechanism directly connected to the disc or by means of a separate pump. Even when an extremely thin screening wall is applied between magnet and bar, the magnet could be damaged by infrared radiation. The use of a closed magnet cooling installation can therefore be considered, particularly in the case of ferromagnetic materials, which have a +Tc of (well) above 80°C.

As already noted, heat behaves as a wave in a bar from the heating point and flowing away toward the rest of the bar. The temperature for reaching the +Tc associated with the ferromagnetic bars can be obtained using fossil and nuclear fuels and cleaner forms, such as the sun as heat source.

Parabolic or lens-controlled heat sources can generate sufficient heat to "illuminate" the bars with for instance a line-shaped or point focus for the purpose of the heat surface. The type of heating is also determined by the eventual application options of the invention, and can be adjustable in terms of size (see the difference between figures 4 and 7) and point of incidence on the length of the bars (double arrow C in figure 7). It is noted that displacement of heat focus 7 along the length of bars 2 is preferably also accompanied by the same or at least corresponding displacement of magnet 4.

The conical or linear focus of a parabola or lens provides the option of heating several or an array of bars, at right angles to or in line with the bar. This provides the option of concentrating all heat energy in intensity on the bars with a view to bringing speed and force closer together.

When a linear focal point is chosen, aligned symmetrical to and parallel to one or more bars, a higher rotation speed is possible, but so is a greater force with which the disc revolves. After all, almost the whole individual bar has the full temperature available for reaching +Tc and does not then need to heat "gradually". This however does increase the chance of damage, since all heat energy is focussed in intensity on the largest part of the bar. In the case a conical focal point is used, the periphery of the intersection which results from selecting the depth of the bar in the conically formed light beam determines the heating of an intended number of bars.

The heating profile and an associated magnet profile ensure in combination that the bar, with a view to fast rotation, would be oriented more toward the outer end of the bar than toward the centre. As in the case of the other profiles, "tempering" the heating brings about a deceleration and, when the temperature is increased, acceleration again of the disc. A grating adjustable during use could be applied in order to reduce the temperature.

The heat source is preferably aligned, as seen in the rotation direction, away from the centre of the north/south separation of the magnetic field. Such a disposition is often most effective when the heat source is aligned substantially next to the magnet (wholly north or south pole). Each bar which reaches its +Tc will make an imaginary hole, and the adjacent array of bars still situated in the magnetic field are pulled toward this hole in order to regain their so-called magnetic equilibrium. Since the subsequent bar also reaches its +Tc, this magnetic equilibrium will never be found as long as the heat source is able to bring the relevant bars to the +Tc temperature within the time period of the rotation. The above stated distance between magnet and bars also serves to accommodate a very thin wall of the magnet cooling housing. This cooler comprises the magnet, but also cooling liquid to keep the vicinity of the magnet below 80°C when a ferromagnetic material is selected which has a +Tc above 80°C and is connected to a reservoir, in which the cooling liquid can cool on the basis of a circulation mechanism which is directly connected to the disc or a separate pump. The magnet makes no contact with the cooler but is mounted in the cooler such that it just does not make contact with the cooler wall and cooling liquid can still flow freely therebetween.

If the bar has a sufficiently great length, a greater acceleration option is available than in the case of a shorter bar.

The bar base serves to connect the bar to the disc and keep it in place, and to maintain the distance to other bars. The collateral forces exerted on a bar can vary from grams to kilograms, so an adequate connection is required.

It will be apparent that many additional and/or alternative embodiments will occur to the skilled person after examination of the foregoing. The bars or plates can thus also have dimensions in a direction/directions other than that transverse to the direction in which the heating acts, although it must be said that it is precisely because of this that the effect of the heating can be guaranteed on the bars only and not on any carrier or other mounting unit for mounting of the bars. In the shown and above described embodiments the bars 2, 12 extend axially relative to shaft 9, but could also extend radially relative to the disc 3 forming a carrier according to the appended claims, and could then even have a form diverging outward relative to disc 3 in order to keep the space between adjacent bars or other elements 2 small. In the foregoing description at least one of the magnet and the heating is adjustable during use, although the position of the carrier can also be varied to enable an acceleration or deceleration to be realized during use of the device according to the invention. As shown schematically with double arrows B in figure 6, even the position of the bars can be varied during use for the same purpose, provided that for this purpose - as for adjustment of the carrier, the magnet and/or the heat source - an adjusting mechanism is provided as designated schematically with arrows B and C in figures 6 and 7. Other variants of the embodiments shown in the drawing and described above are also possible without departing from the definitions of the invention in the appended claims.

## Claims

1. A device for converting heat into dynamic energy, comprising:
- a frame;
- a carrier (3) coupled rotatably to the frame, about an axis;
- at least two ferromagnetic elements (2, 12), which are associated with the carrier and have magnetic properties and which move in a circumferential path during the rotation of said carrier (3) ;
- a magnet (4) which is oriented to the path; and
- a heat source (6, 13) which is disposed close to the path at a distance from the magnet (4) to selectively heat said elements (2, 12) in a location close to, but at a distance, relative to the magnet (4) along the path of the elements (2, 12),
wherein:
- the elements (2) extend from the carrier, and
- the magnet (4) and the heat source (6, 13) are located close to the elongate ferromagnetic elements (2, 12) at a distance from the carrier (3),
the elements (2, 12) are elongate to extend in the longitudinal direction thereof substantially transversely of the acting direction of the heat source (6, 13) in a direction away from the carrier, and
the magnetic field orientation of the magnet (4) is chosen such that it lies parallel to the circumferential path in which the the elongate ferromagnetic elements (2, 12) move during the rotation of said carrier (3).

2. The device as claimed in claim 1, wherein the carrier comprises a rotatable disc (3).

3. The device as claimed in claim 1 or 2, wherein the elements (2, 12) comprise individual bar-like components (2, 12).

4. The device as claimed in claim 3, wherein the position of the bar-like components (12) is adjustable (B).

5. The device as claimed in at least one of the foregoing claims, further comprising a cooling device (8; 10, 11).

6. The device as claimed in at least claim 5, wherein the cooling device comprises a basin (8) with cooling water therein.

7. The device as claimed in at least claim 5 or 6, wherein the cooling device is a cooling (10, 11) associated with the magnet (4).

8. The device as claimed in at least one of the foregoing claims, wherein the heat source (6, 13) comprises at least one light-focussing member, such as a lens (6) or a mirror, for focussing light, such as sunlight (13), on at least one of the elements (2).

9. The device as claimed in at least one of the foregoing claims, wherein the carrier (3) is at least be connectable to a rotation shaft (9), and the rotation shaft (9) can in turn be coupled at least to one of a dynamo, an installation to be driven, or any other form of a load.

10. The device as claimed in at least one of the foregoing claims, wherein the magnet is a permanent magnet (4).

11. The device as claimed in at least one of the foregoing claims, wherein at least one of an orientation along the length of the elements (2, 12) and a size of an heat focus (7) of the heat source (6, 13) is adjustable (C).

12. The device as claimed in at least one of the foregoing claims, wherein at least one of an orientation along the length of the elements (2, 12) and a distance of the magnet (4) relative to the elements (2, 12) is adjustable.

## Patentansprüche

1. Vorrichtung zum Umwandeln von Wärme in dynamische Energie die aufweist:
- einen Rahmen;
- einen Träger (3), der drehbar um eine Achse mit dem Rahmen gekoppelt ist;
- wenigstens zwei ferromagnetische Elemente (2, 12), die zu dem Träger gehören und magnetische Eigenschaften haben und die sich während der Drehung des Trägers (3) in einem Umfangsweg bewegen;
- einen Magneten (4), der zu dem Weg orientiert ist; und
- eine Wärmequelle (6, 13), die nahe an dem Weg in einem Abstand von dem Magnet (4) angeordnet ist, um die Elemente (2, 12) an einer Stelle nahe, aber in einem Abstand relativ zu dem Magnet (4) entlang des Wegs der Elemente (2, 12) zu heizen,
wobei:
- die Elemente (2) sich von dem Träger erstrecken, und
- der Magnet (4) und die Wärmequelle (6, 13) nahe an den länglichen ferromagnetischen Elementen (2, 12) in einem Abstand von dem Träger (3) angeordnet sind,
die Elemente (2, 12) länglich sind, so dass sie sich in ihrer Längsrichtung im Wesentlichen quer zu der Wirkrichtung der Wärmequelle (6, 13) in eine Richtung weg von dem Träger erstrecken, und
die Magnetfeldorientierung des Magneten (4) derart gewählt wird, dass sie parallel zu dem Umfangsweg liegt, in dem die länglichen ferromagnetischen Elemente (2, 12) sich während der Drehung des Trägers (3) bewegen.

2. Vorrichtung nach Anspruch 1, wobei der Träger eine drehbare Scheibe (3) aufweist.

3. Vorrichtung nach Anspruch 1 oder 2, wobei die Elemente (2, 12) einzelne stabartige Komponenten (2, 12) aufweisen.

4. Vorrichtung nach Anspruch 3, wobei die Position der stabartigen Komponenten (12) einstellbar ist (B).

5. Vorrichtung nach wenigstens einem der vorhergehenden Ansprüche, der ferner eine Kühlvorrichtung (8; 10, 11) aufweist.

6. Vorrichtung wenigstens nach Anspruch 5, wobei die Kühlvorrichtung ein Becken (8) mit Kühlwasser darin aufweist.

7. Vorrichtung wenigstens nach Anspruch 5 oder 6, wobei die Kühlvorrichtung eine Kühlung (10, 11) ist, die zu dem Magneten (4) gehört.

8. Vorrichtung nach wenigstens einem der vorhergehenden Ansprüche, wobei die Wärmequelle (6, 13) wenigstens ein lichtfokussierendes Element, wie etwa eine Linse (6) oder einen Spiegel, zum Fokussieren von Licht, wie etwa Sonnenlicht (13), auf wenigstens einem der Elemente (2) aufweist.

9. Vorrichtung nach wenigstens einem der vorhergehenden Ansprüche, wobei der Träger (3) wenigstens mit einer Drehwelle (9) verbindbar ist, und die Drehwelle (9) sich drehen kann, so dass sie mit einem Dynamo und/oder einer anzutreibenden Installation und/oder jeder anderen Form einer Last gekoppelt werden kann.

10. Vorrichtung nach wenigstens einem der vorhergehenden Ansprüche, wobei der Magnet ein Permanentmagnet (4) ist.

11. Vorrichtung nach wenigstens einem der vorhergehenden Ansprüche, wobei wenigstens eine Orientierung entlang der Länge der Elemente (2, 12) und/oder eine Größe eines Wärmefokus (7) der Wärmequelle (6, 13) einstellbar sind/ist (C).

12. Vorrichtung nach wenigstens einem der vorhergehenden Ansprüche, wobei wenigstens eine Orientierung entlang der Länge der Elemente (2, 12) und/oder ein Abstand des Magneten (4) relativ zu den Elementen (2, 12) einstellbar sind/ist.

## Revendications

1. Dispositif de conversion de chaleur en énergie dynamique, comprenant :
un châssis ;
un support (3) couplé au châssis de manière à pouvoir tourner autour d'un axe ;
au moins deux éléments ferromagnétiques (2, 12), qui sont associés au support et présentent des propriétés magnétiques et qui se déplacent sur un trajet circonférentiel pendant la rotation dudit support (3) ;
un aimant (4) qui est orienté vers le trajet ; et
une source de chaleur (6, 13) qui est disposée à proximité du trajet à une certaine distance de l'aimant (4) afin de chauffer sélectivement lesdits éléments (2, 12) à un emplacement proche, mais à une certaine distance, par rapport à l'aimant (4) le long du trajet des éléments (2, 12),
dans lequel :
les éléments (2) s'étendent à partir du support, et
l'aimant (4) et la source de chaleur (6, 13) sont situés à proximité des éléments ferromagnétiques allongés (2, 12) à une certaine distance du support (3),
les éléments (2, 12) sont allongés de manière à s'étendre suivant leur direction longitudinale sensiblement transversalement à la direction active de la source de chaleur (6, 13) dans une direction opposée au support, et
l'orientation de champ magnétique de l'aimant (4) est choisie de telle sorte qu'elle est parallèle au trajet circonférentiel dans lequel les éléments ferromagnétiques allongés (2, 12) se déplacent au cours de la rotation dudit support (3).

2. Dispositif selon la revendication 1, dans lequel le support comprend un disque rotatif (3).

3. Dispositif selon la revendication 1 ou 2, dans lequel les éléments (2, 12) comprennent des composants en forme de barre individuels (2, 12).

4. Dispositif selon la revendication 3, dans lequel la position des composants en forme de barre (12) est réglable (B).

5. Dispositif selon au moins l'une des revendications précédentes, comprenant, en outre, un dispositif de refroidissement (8 ; 10, 11).

6. Dispositif selon au moins la revendication 5, dans lequel le dispositif de refroidissement comprend une cuve (8) contenant de l'eau de refroidissement à l'intérieur.

7. Dispositif selon au moins la revendication 5 ou 6, dans lequel le dispositif de refroidissement est un refroidisseur (10, 11) associé à l'aimant (4).

8. Dispositif selon au moins l'une des revendications précédentes, dans lequel la source de chaleur (6, 13) comprend au moins un élément de focalisation de lumière, tel qu'un objectif (6) ou un miroir, afin de focaliser la lumière, telle que la lumière du soleil (13), sur au moins l'un des éléments (2).

9. Dispositif selon au moins l'une des revendications précédentes, dans lequel le support (3) peut au moins être couplé à un arbre d'entraînement en rotation (9), et l'arbre d'entraînement en rotation (9) peut lui-même être couplé à au moins l'une d'une dynamo, d'une installation à entraîner ou de toute autre forme de charge.

10. Dispositif selon au moins l'une des revendications précédentes, dans lequel l'aimant est un aimant permanent (4).

11. Dispositif selon au moins l'une des revendications précédentes, dans lequel au moins l'une d'une orientation suivant la longueur des éléments (2, 12) et d'une dimension d'un foyer de chaleur (7) de la source de chaleur (6, 13) peut être réglée (C).

12. Dispositif selon au moins l'une des revendications précédentes, dans lequel au moins l'une d'une orientation suivant la longueur des éléments (2, 12) et d'une distance de l'aimant (4) par rapport aux éléments (2, 12) peut être réglée.
